# EUROPEAN PATENT APPLICATION

(11) **EP 2 942 751 A1**
(43) Date of publication of application: **11.11.2015**
(21) Application number: 15157627.9
(22) Date of filing: 04.03.2015
(51) Int. Cl.: G06T 5/50

(54) **Methods for estimation of objects from an image**

(30) Priority: 13.04.2014 US 201414251607
(71) Applicant: Samsung Electronics Co., Ltd, Gyeonggi-do 443-742 (KR)
(72) Inventor: Kenig, Tal, Avihayil, (IL); Yerushalmy, Ido, Tel Aviv (IL); Goldentough, Lev, Lezion, (IL)
(74) Representative: Appleyard Lees

(57) **Abstract**

There is provided a method for estimating semi-transparent object(s) from an image comprising: receiving an image having semi-transparent and overlaid object(s) for estimation; calculating a probability map of the object(s), the probability map comprising multiple pixels corresponding to the plurality of pixels of the received image, wherein each probability map pixel has a value proportional to the probability that the pixel of the received image contains the object(s); calculating an approximation image of an object suppressed image based on the object probability map, wherein the approximation image is substantially equal to corresponding regions of the received image at portions with low probability values, and the approximation image denotes a smooth approximation of the image with the object(s) suppressed at portions with high probability values of the object probability map; and calculating the object(s) for estimation based on the calculated approximation of the object suppressed image.

## Description

### TECHNICAL FIELD

The present invention, in some embodiments thereof, relates to methods and systems for image processing and, more specifically, but not exclusively, to methods and systems for separation of objects from images.

### BACKGROUND

Images may contain different objects overlaid one onto the other in a semi-transparent manner. For example, this phenomenon may be present in X-Ray imaging, in which X-Rays are used for generating a two-dimensional (2D) projection image of a three-dimensional (3D) object. Separating overlaid structures may serve to better visualize certain objects within the image. An exemplary case where this situation occurs is chest radiography, where separating bones from soft tissue may, for example, aid in clinical diagnosis.

Chest radiography is the process of acquiring a 2D X-Ray image of a patient. For many clinical indications (e.g. lung cancer), there is a need to identify small, soft-tissue structures (e.g. lung nodules). Due to the 2D nature of this imaging modality, the ribs and clavicles are overlaid onto the soft tissue, making proper diagnosis of small soft-tissue structures difficult, especially if they are located underneath the ribs.

One possible solution for suppression of bones from X-ray images is dual-energy (DE) X-Ray imaging, in which two X-ray images of the subject are acquired with different X-Ray energy spectra. By performing weighted subtraction of the dual energy images, the bones may be separated from the soft tissue. This technique is also sometimes known as dual energy subtraction. However, dual-energy X-Ray imaging requires dedicated hardware (which may be expensive), careful calibration (which may be difficult and/or complicated to achieve) and may possibly incur additional ionizing radiation exposure to the patient (which may be undesirable to the patient and/or healthcare providers).

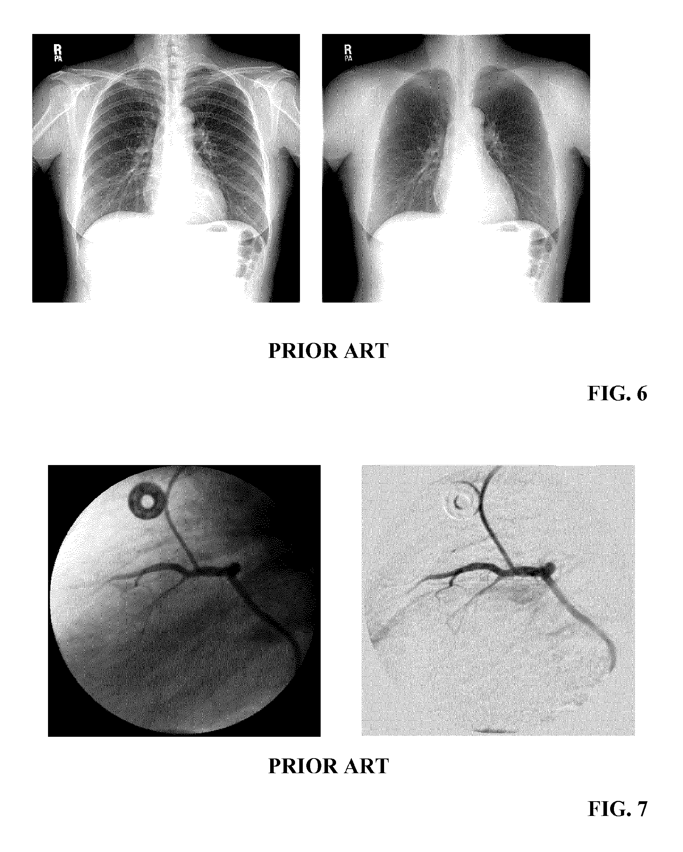

FIG. 6 is an exemplary set of chest x-ray images, obtained using dual energy (DE) subtraction X-ray imaging. The image on the left is a standard radiograph. The image on the right is an x-ray image in which the bones have been suppressed from the surrounding soft tissue using DE subtraction.

Another possible application for separation of overlaid structures from X-Ray images is digital subtraction angiography (DSA). In DSA, a dynamic X-Ray video of blood vessels (e.g., coronary vessels, peripheral vessels, or other vessels) is acquired. Contrast agent (CA) is administered during the acquisition in order to visualize the blood vessels. The video frames acquired prior to CA administration are used to calculate a baseline image, which sometimes is also termed a mask image. The mask image is subtracted from the following frames (containing the CA). The subtraction may provide better visualization of the contrast enhanced blood vessels, without interfering background structures. However, DSA may also incur additional radiation exposure to the patient due to the acquisition of the mask images. Furthermore, due to motion during the acquisition, motion estimation methods may be used in order to compensate for motion prior to the subtraction operation, which may be difficult and/or complicated to perform accurately.

FIG. 7 is an exemplary set of angiography images, obtained using digital subtraction angiography (DSA). The image on the left is the original video frame of contrast enhanced blood vessels. The image on the right is a DSA processed image.

### SUMMARY

According to the present invention there is provided an apparatus and method as set forth in the appended claims. Other features of the invention will be apparent from the dependent claims, and the description which follows. According to an aspect of some embodiments of the present invention there is provided a method for estimating one or more semi-transparent objects from an image comprising: receiving an image having one or more objects for estimation, the one or more objects being semi-transparent and overlaid over one or more other objects, the image having multiple pixels; calculating a probability map of the one or more objects, the probability map comprising multiple pixels corresponding to the plurality of pixels of the received image, wherein each probability map pixel has a value proportional to the probability that the pixel of the received image contains the one or more objects; calculating an approximation image of an object suppressed image based on the object probability map, wherein the approximation image is substantially equal to corresponding regions of the received image at portions with low probability values, and the approximation image denotes a smooth approximation of the image with the one or more objects suppressed at portions with high probability values of the object probability map; and calculating the one or more objects for estimation based on the calculated approximation of the object suppressed image.

Optionally, the pixels of the probability map do not correspond to the pixels of the received image in a bijective manner.

Optionally, calculating the probability map comprises: applying a transformation to the received image to generate a transformed image; extracting features from the transformed image; and calculating the probability values by applying a regression function to the extracted features. Optionally, the transformation function is selected to reduce the variability of the extracted features. Optionally, the transformation function comprises a grey level normalization and a geometric transformation. Optionally, the extracted features comprise one or more of: responses to linear filters at different scales, orders and directions, grey values from the transformed images, and responses to nonlinear filters promoting specific structures. Optionally, the regression function is pre-trained using training images. Optionally, the regression function is a *k* nearest neighbors (kNN) regression.

Optionally, the method further comprises calculating the image with the one or more objects suppressed, by subtracting the approximated one or more objects from the received image, and at least one of outputting, displaying, and forwarding the image with the one or more objects suppressed. Optionally, subtracting comprises weighted subtracting, wherein subtraction weights are determined individually for the different approximations of the one or more objects, the weights selected to reduce the probability of creating visually distinguishable artifacts on the border of the subtracted object approximations.

Optionally, calculating the one or more objects estimation based on the calculated approximation of the object suppressed image comprises: calculating a difference image by subtracting the approximation image from the received image, wherein at regions of low object probability based on the object probability map pixels of the difference image have substantially zero value, and at regions of high object probability based on the object probability map the pixels have substantially equivalent value to the pixels of the one or more objects overlaid on fine background image details; and calculating an estimation of the objects as a low order approximation of the difference image. Optionally, the method further comprises pre-processing the one or more objects segments before constructing the generative model, the pre-processing selected to reduce variability within segment sets of same instances of the one or more objects.

Optionally, the smooth approximation of the object suppressed image is a weighted low-pass filtered image, the filter cutoff frequency being lower than an expected object frequency along one or more dimensions.

Optionally, the smooth approximation of the object suppressed image is a weighted polynomial regression.

Optionally, low order object approximation is comprised of: delineating the objects by applying a segmentation process to the probability map, or by detecting the objects by applying an object detection and/or ridge detection process; dividing the objects into multiple segments; constructing a generative model from the plurality of segments; and applying the generative model to the plurality of segments to generate low-order approximations of the segments; and re-combining the low-order approximations of the segments into a low order approximation of the object.

Optionally, the generative model is a Principal Components Analysis model.

Optionally, the object segments are linear segments extracted from the object along a substantially fixed direction relative to an estimated direction of the one or more objects.

Optionally, the object segments are image patches extracted from the object along a substantially fixed direction relative to an estimated direction of the one or more objects. Optionally, the substantially fixed direction is selected such that the variability within extracted object segments is reduced.

Optionally, re-combining comprises re-positioning the approximated object segments back to the location in an image domain where the corresponding object segment is extracted from. Optionally, re-positioning the object segments is performed in a weighted manner when the extracted objects segments overlap.

Optionally, the received image is acquired by an x-ray based imaging modality.

Optionally, the received image is a chest x-ray or an angiogram, and wherein the one or more objects are one or more of: ribs, clavicles, contrast enhanced blood vessels, tubes, wires.

According to an aspect of some embodiments of the present invention there is provided a method for generating a trained regression function for use in a process to estimate semi-transparent objects from an image, comprising: receiving multiple pairs of training images, each pair of training images comprises a training image with one or more objects for estimation and an object image of the one or more objects for estimation, the one or more objects being semi-transparent and overlaid over one or more other objects, wherein each of the pairs of training images comprise multiple pixels; and training a regression function to generate an object probability map for an acquired image with one or more semi-transparent objects for estimation, the training based on the pairs of training images, the object probability map comprising multiple pixels corresponding to the plurality of pixels of the received image, wherein each probability map pixel has a value proportional to the probability that the pixel of the received image contains the one or more objects.

According to an aspect of some embodiments of the present invention there is provided a method for suppressing semi-transparent objects in an image comprising: receiving an image having one or more objects for suppression, the one or more objects being semi-transparent and overlaid over one or more other objects, the image having multiple pixels; receiving an object probability map, the object probability map is an object probability map comprising multiple pixels corresponding to the plurality of pixels of the received image, wherein each probability map pixel has a value proportional to the probability that the pixel of the received image is for suppression; receiving a difference image or calculating the difference image based on the received image and received object probability map, wherein regions of the difference image corresponding to one or more portions of the object probability map for suppression have substantially zero value, and regions of the difference image corresponding to portions other than the one or more portions of the object probability map for suppression have substantially equivalent value to the regions of the one or more objects overlaid on fine background image details; identifying separate instances of the one or more objects within the difference image based on the object probability map; dividing the identified instances of the one or more objects within the difference image into segments; and calculating a generative model based on the segments, for generating an approximation image of the one or more objects for suppression.

Optionally, the image comprises a chest x-ray, the one or more objects comprises ribs, and identifying comprises identifying separate ribs and clavicles.

Optionally, dividing comprises dividing the identified instances of the one or more objects into overlapping image patches to induce regularity along an approximation of the one or more objects.

Optionally, the method further comprises pre-processing the one or more object segments before constructing the generative model, the pre-processing selected to compensate for accurate segmentation of the one or more objects and to reduce variability within segment sets of different instances of the one or more objects.

Optionally, the method further comprises: approximating the object segments to a pre-determined order based on the generative model; generating an approximation of the one or more objects based on the object segment approximations; and generating the image with the one or more objects suppressed by subtracting the approximation of the one or more objects from the received image having the one or more objects for suppression.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of a method of estimating and/or suppressing one or more objects from an image, in accordance with some embodiments of the present invention;
FIG. 2 is a flowchart of a method of training a regression function for use in a process to estimate and/or suppress objects from an image, in accordance with some embodiments of the present invention;
FIG. 3 is a flowchart of a method of applying a trained a regression function in a process to estimate and/or suppress objects from an image, in accordance with some embodiments of the present invention;
FIG. 4 is a flowchart of a method of calculation object estimations as part of a process to suppress objects from an image, in accordance with some embodiments of the present invention;
FIG. 5 is a schematic block diagram of a system for suppressing one or more objects from an image, in accordance with some embodiments of the present invention;
FIG. 6 is an exemplary set of dual energy subtraction images, to help understand some embodiments of the present invention;
FIG. 7 is an exemplary set of digital subtraction angiography images, to help understand some embodiments of the present invention;
FIG. 8 is an exemplary flowchart of a method of training a regression function to generate a bone probability map, in accordance with some embodiments of the present invention;
FIG. 9 is an exemplary flowchart of a method of applying the trained regression function to generate a bone probability map, in accordance with some embodiments of the present invention;
FIG. 10 is an image of an exemplary chest radiograph and an image of a probability map obtained from the chest radiograph, in accordance with some embodiments of the present invention; and
FIG. 11 is a set of exemplary images based on the method of FIG. 1, in accordance with some embodiments of the present invention.

### DETAILED DESCRIPTION

An aspect of some embodiments of the present invention relates to systems and/or methods for estimation of objects in an image based on an object probability map. The object probability map denotes the probability of each pixel belonging to the sought object. Optionally, the object probability map is generated by a trained regression function.

Optionally, the objects for estimation in the image are semi-transparent. As used herein the term *semi-transparent* means that the objects for estimation are overlaid on other objects (which may not be estimated). Several objects may be overlaid over each other.

Optionally, the estimated object in the image is suppressed. Optionally, the object probability map denotes one or more portions of the image containing objects that are to be suppressed.

Optionally, the object probability map is independent of the pixel values of the object for suppression. The object probability map may define probability values, which may not be suggestive of the actual pixel values at corresponding pixel locations. For example, the object probability map may not preserve the pixel values of the image, such as grey level values. The values of the probability map are generally unrelated and/or not indicative of the pixel values of the original image. The values of the probability map relate to the spatial distribution of the desired object.

The object estimation systems and/or methods are based on applying different methods for different parts of the object estimation process. A trained regression function is utilized for determining the object spatial distribution. A generative model approach is used to provide accurate object estimates.

The object spatial distribution is calculated based on applying the trained regression function to create the object probability map. Explicit estimation of the object pixel values may not be required. Object segmentation as a preliminary step to applying the generative model is performed based on the object probability map. In this manner, complex and/or error prone segmentation of the object may not be required.

Optionally, the object probability map denotes which portions of the image contain the desired object. Alternatively or additionally, the object probability map denotes which portions of the image are unlikely to contain the sought object.

Optionally, the object probability map denotes the probability that certain regions correspond to the sought object, for example, regions corresponding to the objects for suppression. Alternatively or additionally, the object probability map denotes the probability that certain regions do not correspond to the sought object, for example, regions other than the objects for suppression. The regions may be, for example, individual pixels, groups of pixels, individual voxels, groups of voxels, or other regions.

Optionally, the object probability map is a set of pixels that correspond to the pixels of the image, where probability map pixels have a value proportional to the probability of corresponding pixels to belong to the object(s) for estimation in the image. Optionally, the probability values are in the range of, 0 to 1.0, in increments of 0.1, 0.01, or other probability value ranges and/or increments.

In another example, the object probability map is a binary function. One type of value (e.g., 1) denotes that the region containing the sought object. The other type of value (e.g., 0) denotes that the region not containing the sought object. Other types of object probability maps may be used.

Optionally, the probability map is an image. Optionally, the intensity of the pixel denotes the probability of corresponding to the object, for example, the probability value is normalized to grayscale values of the pixel, such as zero for black and 1.0 for white.

Optionally, the probability map is generated by applying a trained regression function to the image. Optionally, the size of the data set required for training the regression function is smaller and/or less diverse, for example, as compared to a training set required for training a regression function that estimates grey levels of the object. The trained regression function may not produce the final object estimation image, which may help in preserving the pixel values of the original image.

Optionally, the objects for suppression are identified, localized and/or segmented based on the probability map. Optionally, accurate segmentation is not required.

Optionally, the regression function is used to obtain the object probability map. Optionally, the regression function is only used for generating the object probability map. In this manner, there may be no need to explicitly estimate the object grey level values. Optionally, estimating the object pixel values (e.g., grey levels) is not performed.

Use of the object probability map may overcome the need for accurate segmentation of the object as a preliminary step. Such accurate segmentation may be difficult to achieve and/or may be error prone.

Optionally, the object probability map is applied to obtain a smooth approximation of an object suppressed image. Optionally, the smooth approximation is performed for the entire image simultaneously. Performing the smooth approximation in such a manner may induce spatial regularity. The smooth approximation method may be used instead of other processes, such as a per-segment process.

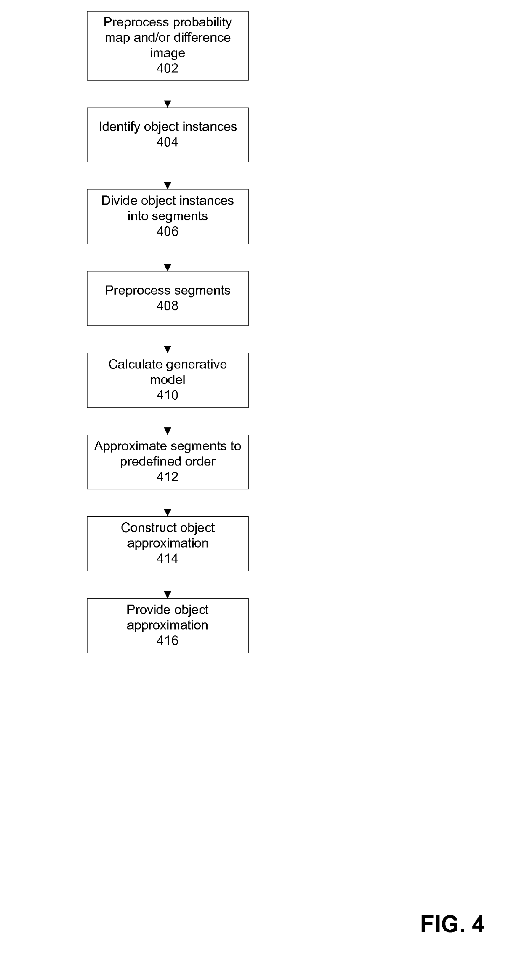

Optionally, the object probability map is applied for localization of separate object instances, for example, by ridge detection. Use of the object probability map may not require accurate segmentation of the sought objects. Optionally, the lack of accurate segmentation is compensated by pre-processing object segments before construction of the generative model. Details of the object segments are described below, for example, with reference to block 406 of FIG. 4.

Optionally, the object is divided into overlapping image patches. The overlapping may induce regularity along the approximated object. In this context, regularity may be defined as smoothness of the object along at least one direction. There may be no need to perform an additional filtering step, before and/or after.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

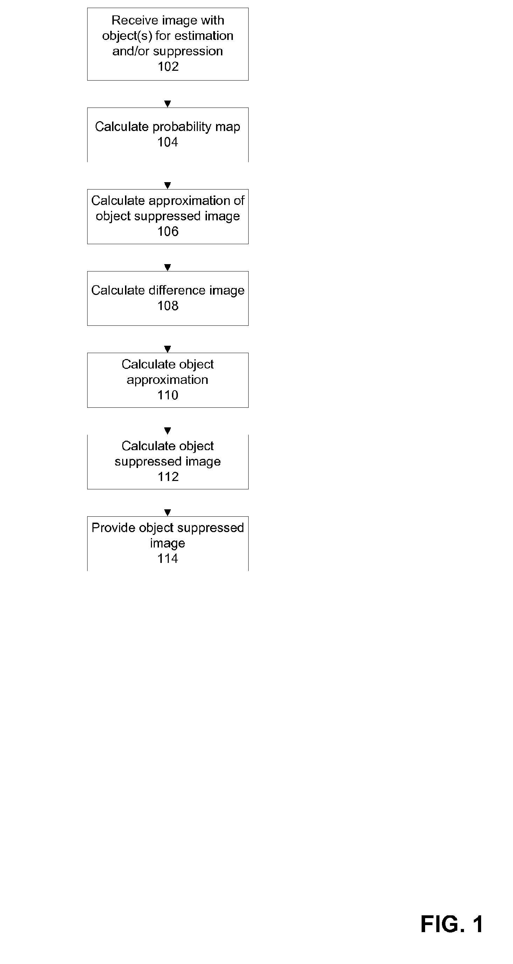

Reference is now made to FIG. 1, which is a flowchart of a method of suppressing one or more objects from an image, in accordance with some embodiments of the present invention. Alternatively or additionally, the method, or some blocks thereof may be used to estimate and/or identify the objects in the image, for example, to emphasize the objects, isolate the objects (e.g., present an image of only the object), mark the objects, process the object (e.g., process the object independently of the remaining portions of the image), or other methods based on identification of the object in the image. As used herein, the term *suppressing* may sometimes refer to other methods based on the estimated and/or identified object, for example, marking, processing, emphasizing, or other methods.

Optionally, the object estimation and/or suppression method is performed automatically, by a software module, by a hardware module, and/or by a combination of hardware and software. Manual and/or semi-manual intervention may not be required, for example, marking of the objects by an operator. Difficult and/or error prone accurate object segmentation may not be required. The automated object suppression may be simple and/or fast, which may be suitable for clinical practice. For example, the automated object suppression may proceed by a single choice selection from a menu, a mouse click, or other simple activation. For example, the automated object suppression may be performed while the operator is looking at the image, in less than about 1 second, or less than about 5 seconds, or within other short periods of time.

The method may reduce radiation exposure of the patient as compared to other methods for object suppression. For example, a single x-ray (e.g., chest x-ray) or fewer images (e.g., digital angiography) may be required to extract the data to generate the object suppressed image, instead of two or more images using other suppression techniques, such as digital subtraction angiography or dual energy subtraction. The reduction in number of images may reduce patient radiation exposure.

As the method processes existing images (e.g., standard x-rays), the method may provide an alternative to expensive equipment (e.g., dual energy subtraction x-ray machine), complex and/or error prone set-ups (motion estimation for digital subtraction angiography). The method may be implemented on existing equipment and/or workstations, for example, as an installed software module, an external device plugged in, and/or through a remote server.

The method improves clinical diagnosis and/or screening of medical conditions, by providing images with undesired and/or interfering objects (e.g., bones) that are suppressed so that desired structures (e.g., soft tissue) may be inspected more clearly.

Optionally, at 102, an image having one or more objects for estimation and/or suppression is received. Optionally, the image is digital, made of many pixels.

Optionally, the objects for estimation and/or suppression are semi-transparent.

Optionally, the image is acquired from an X-ray based imaging modality, for example, an X-ray machine, a fluoroscopy machine, or other devices.

Examples of received images include: chest X-rays, vessel angiograms, or other images. Examples of objects for suppression include: bone structures, blood vessels (e.g., contract enhanced), foreign objects (e.g., tubes and wires such as chest tubes, central lines, breathing tubes, pacemakers, left ventricular assist devices) or other objects. Examples of images having objects for suppression include: chest X-rays with ribs and/or clavicles for suppression, digital angiography with contrast enhanced blood vessels for suppression.

Optionally, the objects for suppression possess particular structure, for example, the objects for suppression are elongated.

At 104, an object probability map is calculated for the received image.

The probability map is a set of pixels that correspond to the pixels of the received image with the object for suppression. The correspondence between the probability map and the received image may be performed in a non-bijective manner. Alternatively, correspondence is bijective. Each pixel has a value that is proportional to the probability that the pixel of the received image contains the desired object. High probability values correspond to pixels of the objects. Low probability values correspond to pixels other than those of the objects. Regions other than pixels may be used, for example groups of pixels, individual voxels, groups of voxels, or other regions.

Optionally, the probability map is calculated by applying a transformation function to the received image to generate a transformed image. Features are extracted from the transformed image. The probability values for the probability map are calculated by applying a regression function to the extracted features. Optionally, the transformation function is selected to reduce variability of the extracted features. The transformation function may be, for example, grey level normalization and/or a geometric transformation and/or other suitable transformations. The extracted features may be, for example, responses to linear filters (e.g., directional Gaussian derivatives) at different scales, orders and directions, grey values from the transformed images, responses to nonlinear filters promoting specific structures, and/or other suitable features.

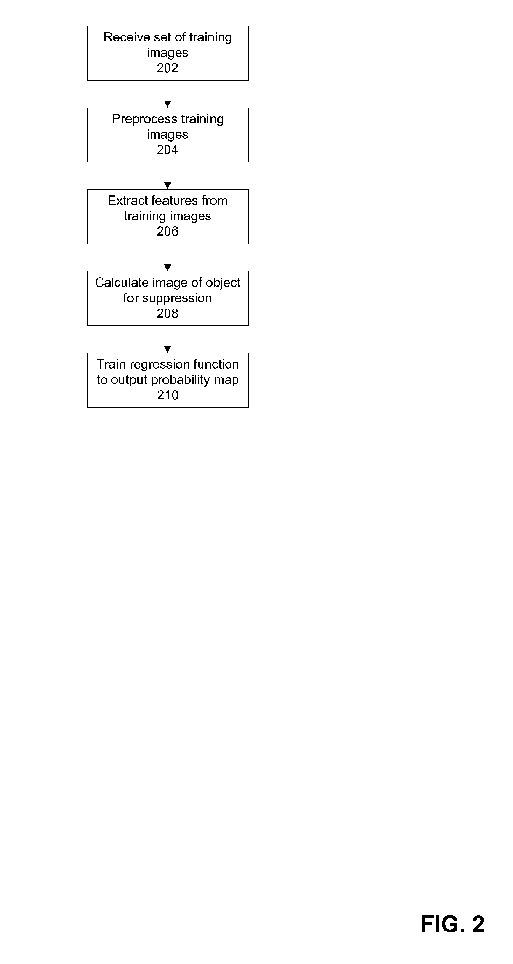

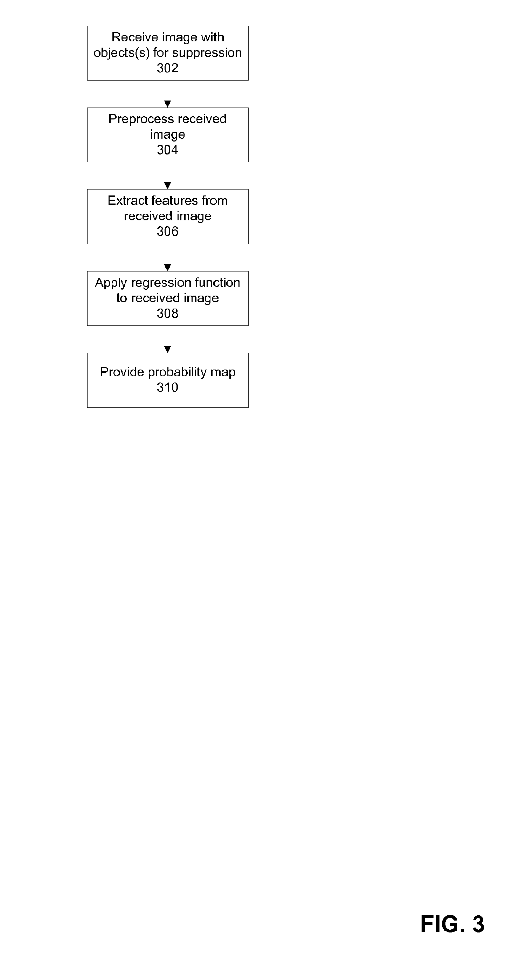

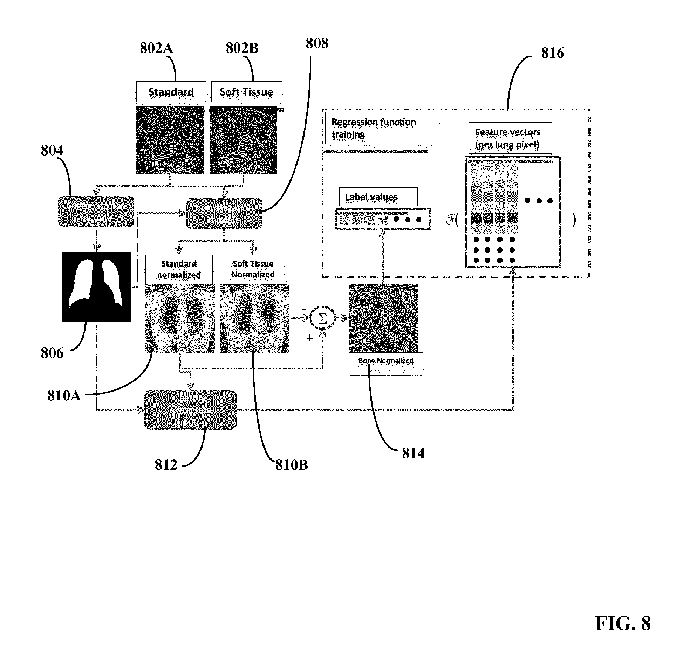

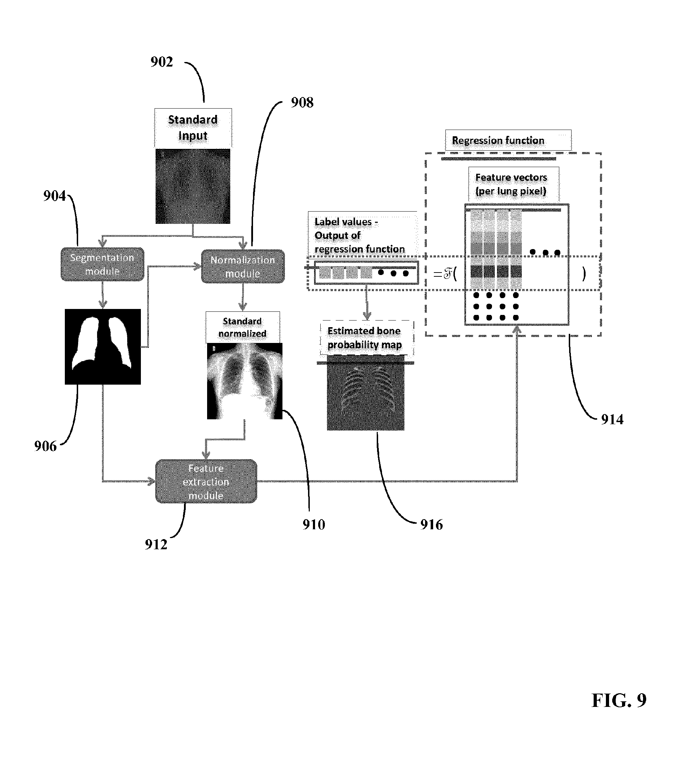

Optionally, the probability map is generated as an output of a trained regression function. Exemplary methods of training the regression function are described below with reference to FIG. 2 and FIG. 8. Exemplary methods of applying the trained regression function to images to generate the object probability map are described below with reference to FIG. 3 and FIG. 9.

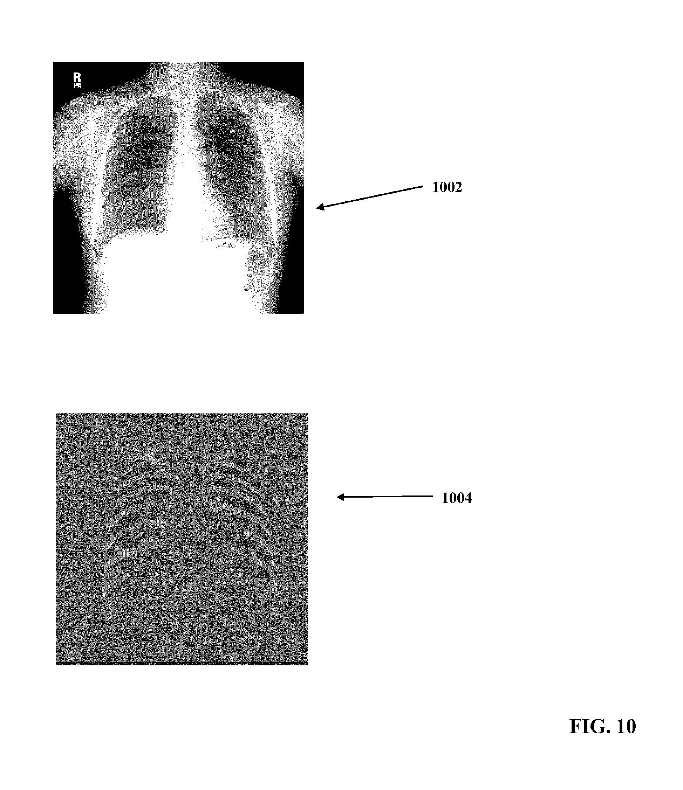

Attention is diverted to FIG. 10, which is a set of exemplary images showing an exemplary chest radiograph 1002 and a corresponding bone probability map 1004 calculated based on the methods and/or systems described herein, in accordance with some embodiments of the present invention.

Referring back to FIG. 1, optionally, at 106, an approximation of the image with the object suppressed is calculated based on the object probability map. The approximation image may be a low resolution, smooth version of the object suppressed image. The approximation image may be used to suppress low frequency background content (e.g., at block 108) prior to more accurate modeling of the object (e.g., at block 110).

Optionally, at regions of low object probability based on the object probability map, pixels of the approximation image are substantially equal to corresponding pixels of the received image. Substantially equal is, for example, within about 0.1%, or about 1%, or about 3%, or about 5%, or about 10%, or other smaller, intermediate or larger values. Optionally, at regions of high object probability based on the object probability map, pixels of the approximation image denote a smooth approximation of the image with the objects suppressed.

The low and/or high probability values may be, for example, cut-off threshold values. Low values may be, for example, less than about 0.01%, less than about 0.1%, less than about 1%, less than about 3%, less than about 5%, less than about 10%, or other smaller intermediate or larger values. High values may be, for example, greater than about 90%, or greater than about 95%, or greater than about 97%, or greater than about 99%, or greater than about 99.9%, or other smaller, intermediate or larger values. The probabilities may be preselected by the manufacturer, selected by the user, or set by other methods. The probabilities may be selected by trial and error, based on software that estimates suitable probabilities, or other methods.

Optionally, the pixel values of the received image are substantially preserved in the approximation image. Optionally, the grey level values of the pixels are substantially preserved. Substantially preserved is, for example, within about 1%, or within about 3%, or within about 5%, or within about 7%, or within about 10%, or other smaller, intermediate or larger values.

Optionally, the approximation image of the object suppressed image is simultaneously calculated for all pixels of the received image.

Optionally, the approximation image is calculated by applying a filter over the original input image. Optionally, the filter is a weighted low-pass filter. Optionally, the cut-off frequency of the low-pass filter is lower than the expected object frequency along a preselected dimension. The preselected dimension may be based on prior knowledge of the object that is being suppressed, for example, on the orientation of ribs in the image. Optionally, the weights used for the weighted filtering are based on a monotonically non-increasing function of the probability map, for example, a decaying exponential of the probability map, and/or a binary weight which nullifies pixels of high object probability as defined by the probability map, or other suitable functions and/or other weights.

Alternatively or additionally, non-weighted filtering is applied. For example, non-weighted filtering is applied iteratively until a predefined criterion of convergence is met. The iterative filtering may be carried out only at certain pixel locations corresponding to high object probability as determined by the probability map.

Alternatively or additionally, the approximation image is calculated by fitting a piecewise polynomial to the image, where the weights (e.g., as described above) are used to control the degree in which pixels within the image contribute to the polynomial fitting process. The polynomial fitting process may use some or all of the image pixels. Optionally, the fitted polynomial is calculated at pixel locations corresponding to high object probability as determined by the probability map. The smooth approximation of the object suppressed image may be a weighted polynomial regression.

Optionally, at 108, a difference image is calculated. Optionally, the difference image is calculated by subtracting the approximation image (block 106) from the received image (block 102). The difference image may contain the object for estimation and/or suppression overlaid with fine, high frequency structures belonging to the background.

Optionally, pixel values of the difference image are substantially zero at low object probability locations as defined by the probability map. Optionally, at high object probability locations, pixels of the difference image have substantially equivalent values to the objects for suppression overlaid on top of fine background details. Substantially zero is, for example, zero, or less than about 0.5%, or less than about 1%, or less than about 3%, or less than about 5%, or other intermediate or larger values. Substantially equivalent is, for example, within about 0.5%, or about 1%, or about 3%, or about 5%, or other intermediate or larger values.

Optionally, at 110, an approximation of the objects for suppression is calculated. Optionally, the objects are estimated by applying a low-order approximation to the difference image. Optionally, the objects are estimated to eliminate, attenuate and/or suppress the fine background details from the difference image. An exemplary method of approximating the object for suppression is described in detail below with reference to FIG. 4.

At 112, the image with the suppressed object is calculated. Optionally, the object suppressed image is calculated by subtracting the approximation of the object for suppression (block 110) from the received image (block 102).

Optionally, the subtraction is a weighted subtraction. Optionally, the subtraction weights are determined individually for each (or some) object approximation. The subtraction weights may be selected based on the spatial location of each sample within the object approximation. Weighting the subtraction process may be performed to reduce the probability of creating visually distinguishable artifacts on the border of the subtracted object approximations.

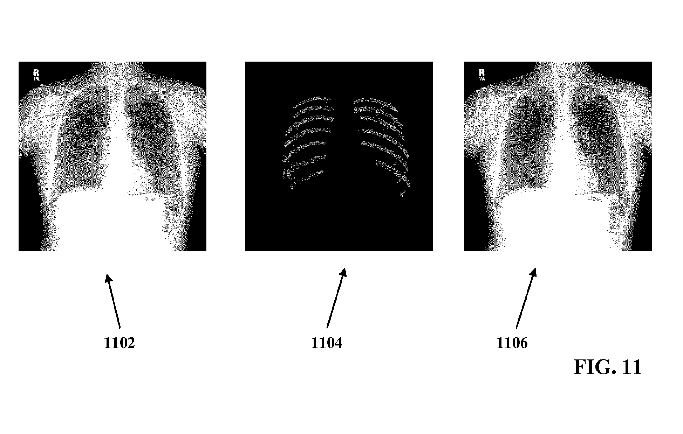

Attention is now made to FIG. 11, which is a set of exemplary images illustrating the method of FIG. 1, in accordance with some embodiments of the present invention. From an exemplary chest radiograph 1102, an object approximation image 1104 of the ribs is generated, for example, as described with reference to block 110. A bone-subtracted chest radiograph 1106 (i.e., the object suppressed image) is generated, for example, as described with reference to block 112.

Referring back to FIG. 1, optionally, at 114, the object suppressed image is provided. The image may be, for example, stored (e.g., on a local memory for later retrieval), displayed (e.g., on a monitor for a healthcare provider to view), and/or forwarded (e.g., on an internet connection to a remote location.

The method of FIG. 1 may be used in other ways. For example, at 110, the object approximation may be displayed to the operator, stored, or forwarded on. The object approximation may be viewed independently of the rest of the received image. For example, bones may be viewed without the surrounding soft tissue to help in diagnosing bone conditions such as fractures, bone destruction (e.g., from infection), bone tumors, osteoporosis, calcification, bone repair healing, or other bone conditions.

The estimation of the object may be calculated as a low order approximation of the difference image. The low order approximation may be performed by delineating the objects by applying a segmentation process to the probability map, and/or by detecting the objects by applying an object detection and/or ridge detection process. The objects may be divided into segments. A generative model may be constructed from the plurality of segments. The generative model may be applied to the segments to generate low-order approximations of the segments. The low-order approximations of the segments may be combined into the low order approximation of the estimated object.

In another example, instead of being suppressed, the object is to be enhanced. The object probability map (block 104) may represent the probability of pixels of the received image being enhanced. Calculation of the difference image (block 108) may or may not be necessary. The object suppressed image (block 112) may instead be the object enhanced image. Image enhancement may occur, for example, when the enhanced object is the goal of the image, and/or when the enhanced object is to be viewed in context of the rest of the image. For example, bones may be enhanced over surrounding soft tissues to improve visualization of the bone structure. Enhancement of the bones may help in diagnosis of the bone condition.

Reference is now made to FIG. 2, which is a flowchart of a method of training a regression function to generate the probability map, in accordance with some embodiments of the present invention. Optionally, the method is automatically performed, by a software module, by a hardware module, and/or by a combination of hardware and software.

As used herein, the term regression function may sometimes mean a mapping between one or more predictor variables, to a single response variable. As used herein, the phrase trained regression function may sometimes mean a regression function, where the mapping between the input predictor variables and the output response variable is learned from an ensemble of teaching pairs, where each pair is comprised of a vector of predictor values and a corresponding response value. Optionally, the predictor variables are certain features extracted from the images on a per-pixel basis, and the response variable is the object probability at the corresponding pixel location.

Optionally, at 202, a set of training images is received. Optionally, each pair of training images contains one image with the objects of interest, and another corresponding image in which the objects have been suppressed. Alternatively or additionally, each pair of training images contains one image with the objects of interest, and another corresponding image in which the only the objects of interest appear. Optionally, the images are digital, made from multiple pixels.

Optionally, the objects of interest are semi-transparent.

The sets of training images are acquired, for example, by using different imaging modalities, by a manual process to delineate the objects, by a semi-automatic process to delineate the objects, by simulation, and/or by other methods.

Optionally, at 204, the training images are pre-processed. Optionally, the pre-processing is designed to reduce variability of the extracted features. Examples of pre-processing include:
segmentation of the lung region, a geometrical transformation, a grey level normalization procedure,
and/or other suitable methods.

Optionally, at 206, features are extracted from the training images.

Optionally, features are extracted on a per-pixel basis. Optionally, the extracted features are pixel values. Alternatively of additionally, the features are responses to linear and/or non-linear filters.

Optionally, at 208, an image of the objects for suppression is calculated. The image of the object for suppression may be calculated when such an image is not available as part of the pre-existing training image set. Alternatively, the image of the object for suppression does not need to be calculated, as such an image may be available as part of the training image set. For example, the training images may include a standard radiograph and a bone only image of the radiograph. The act of block 208 may depend on the type of input training images available.

Optionally, the object image is calculated based on the difference between the training image with the objects for suppression and the corresponding training image with suppression of the objects.

At 210, the regression function is trained to generate the object probability map, optionally the object probability map as an output when an image having objects for suppression is provided as the input.

Optionally, the extracted features (from block 206) serve as the predictor variables for the regression function. Optionally, the response variable is the object probability at the corresponding extracted pixel location.

Optionally, the regression function is trained based on the mapping between the predictor and response variables.

Optionally, the regression function is trained based on mapping between the extracted features and the object probability at the corresponding pixel location.

Optionally, the regression function is trained based on mapping between features extracted from the training image with the object for suppression, and grey level values from the object image at the corresponding pixel location (block 208).

Exemplary realizations of the trained regression function include: a realization in which the regression function contains normalization of the feature vector, a dimensionality reduction step and k nearest neighbors (kNN) regression. The dimensionality reduction step is optional and may be omitted. Optionally, the dimensionality reduction step is performed using Principal Components Analysis (PCA). Other suitable methods for dimensionality reduction may be used.

Reference is now made to FIG. 8, which is an exemplary method of training a regression function to generate a probability map to suppress bones from chest x-rays, in accordance with some embodiments of the present invention. It is noted that the method of FIG. 8 may be utilized for other applications, the bone suppression from chest x-rays being exemplary. The method of FIG. 8 may be based on the method of FIG. 2.

A pair of training images, a standard chest x-ray 802A and a corresponding soft-tissue x-ray 802B (i.e., bones suppressed) are provided. (Corresponding to block 202 of FIG. 2).

Optionally, images 802A and/or 802B are preprocessed by segmentation module 804 to generate a segmented image based on a segmentation map 806, such as a segmentation map of the lung tissue. Alternatively or additionally, images 802A, 802B and/or 806 are preprocessed by normalization module 808 to normalize the grey values within the images. (Corresponding to block 204 of FIG. 2).

Features may be extracted from processed images 810A (corresponding to image 802A) by a feature extraction module 812. Alternatively or additionally, features are extracted from the segmented image. (Corresponding to block 206 of FIG. 2).

A bone normalized image 814 (mainly bones with limited or no soft tissue background) may be calculated by subtracting image 810B (without bones) from image 810A (standard X-ray). Image 814 may represent the bone probability map (Corresponding to block 208 of FIG. 2). Alternatively or additionally, the response image (e.g. bone only image 814 and/or object only image) may be directly provided to the training module as input.

A regression function module 816 is trained by the mapping of the extracted features to the probability values obtained from image 814 (Corresponding to block 210 of FIG. 2).

Reference is now made to FIG. 3, which is a flowchart of a method of generating the probability map by applying the trained regression function, in accordance with some embodiments of the present invention. Optionally, the method is automatically performed, by a software module, by a hardware module, and/or by a combination of hardware and software.

Optionally, at 302, an image having objects for suppression is received. For example, a chest x-ray for suppression of ribs.

Optionally, at 304, the received image is pre-processed. Optionally, the pre-processing is selected based on the pre-processing performed as part of the training of the regression function, for example, as described with reference to block 204 of FIG. 2, and/or elements 804, 806 and/or 808 of FIG. 8.

Optionally, at 306, features are extracted from the received image. Optionally, the extracted features correspond to the features extracted from the training images as part of training of the regression function, for example, as described with reference to block 206 of FIG. 2, and/or element 812 of FIG. 8.

At 308, the regression function is applied to the received image to generate the object probability map.

Optionally at 310, the object probability map is provided for additional processing, for example, as part of the object suppression method of FIG. 1.

Reference is now made to FIG. 9, which is an exemplary method of applying a trained regression function to generate a probability map as part of a process to suppress bones from chest x-rays, in accordance with some embodiments of the present invention. It is noted that the method of FIG. 9 may be utilized for other applications, the bone suppression from chest x-rays being exemplary. The method of FIG. 9 may be based on the method of FIG. 3.

A chest x-ray image 902 is provided. The chest x-ray contains ribs and/or clavicles for suppression. (Corresponding to block 302 of FIG. 3).

Optionally, image 902 is preprocessed by segmentation module 904 to generate a segmented image based on a segmentation map 906, such as a segmentation map of the lung tissue. Alternatively or additionally, image 902 is preprocessed by normalization module 908 to normalize the grey values within the images. (Corresponding to block 304 of FIG. 3).

Features may be extracted from processed image 910 (corresponding to image 902) by a feature extraction module 912. Alternatively or additionally, features are extracted from the segmented image. (Corresponding to block 306 of FIG. 3).

The extracted features may be provided as inputs into a regression function module 914, to generate an object probability map 916, for example, an image of the probability of the ribs within received chest x-ray 902. (Corresponding to block 308 of FIG. 3).

Bone probability map 916 may be used for suppression of the ribs and/or clavicles of chest x-ray 902, as described herein. (Corresponding to block 310 of FIG. 3).

Reference is now made to FIG. 4, which is a method of calculating an approximation of an object for suppression in an image, in accordance with some embodiments of the present invention. The method of FIG. 4 may be used to generate the object approximation as described with reference to block 110 of FIG. 1.

Optionally, at 402, the object probability map is preprocessed. Alternatively or additionally, the difference image is preprocessed.

Optionally, a geometrical transformation is applied to the probability map. The geometrical transformation may be, for example, similar or equivalent to the geometrical transformation used for the probability map calculation, or other transformations, for example, as described with reference to block 204 of FIG. 2.

Optionally, a geometrical transformation is applied to the difference image. The geometrical transformation may be, for example, similar or equivalent to the geometrical transformation applied to the probability map.

Other suitable preprocessing methods may be applied.

At 404, instances of the object for suppression are identified. The objects may be identified in the difference image and/or the probability map. For example, in an application for bone suppression in chest radiographs, the objects for suppression are ribs, and separate instances of ribs are identified. In another example, in an application related to digital angiography, the objects for suppression are blood vessel segments, and separate instances of blood vessel branches are identified.

Optionally, the objects are delineated by applying a segmentation process to the probability map, and/or by detecting the objects by applying an object detection and/or ridge detection process.

Optionally, instances of the object for suppression are identified based on the object probability map. For example, the probability map analysis is performed based on a ridge detection algorithm. Other suitable methods for identifying different object instances may be used.

Optionally, the identified object instances are enumerated.

Optionally, at 406, the object instances (some or all) are divided into segments. Optionally, the object instances are divided within the difference image. Optionally, the object instances are divided into similar segments. Optionally, each object instance within the difference image is divided into semantically similar segments.

Optionally, the object segments are line profiles sampled along a fixed direction relative to an estimated object instance direction. Alternatively or additionally, the object segments are image patches oriented along a substantially fixed direction relative to an estimated object instance direction. Optionally, the image patches overlap.

Optionally, the indentified instances of the object are divided into overlapping image patches to induce regularity along an approximation of the object.

Optionally, the object segments are linear segments extracted from the object along a substantially fixed direction relative to an estimated direction of the at least one object. Alternatively or additionally, the object segments are image patches extracted from the object along a substantially fixed direction relative to an estimated direction of the at least one object. The substantially fixed direction may be selected such that the variability within extracted object segments is reduced.

Optionally, at 408, the segments are preprocessed. Optionally, the pre-processing is selected to compensate for accurate segmentation of the object for suppression. Alternatively or additionally, the preprocessing is selected to reduce (e.g., minimize) variability within segment sets of same instances of the object.

Exemplary pre-processing methods include: grey level normalization followed by a spatial transformation such as a rigid transformation, an affine transformation, and/or a non-rigid transformation. Other suitable pre-processing methods may be used.

At 410, a generative model is calculated. Optionally, the generative model is calculated based on the segments. Optionally, the generative model is selected to generate an approximation image of the object for suppression.

As described herein, the phrase *generative model* sometimes means a model which is optionally calculated from a sample of observations, and given a new test sample, is capable of generating a low-order approximation of the test sample. As described herein, the phrase "low-order approximation" sometimes means an approximation which is determined by a small number of parameters relative to the original dimensionality of the sample.

Optionally, the generative model is a principal components analysis (PCA) model. A PCA model may provide a low-order approximation of a test sample as a linear combination of a prespecified number of basis samples, sometimes termed Eigen-samples. The Eigen-samples and linear combination coefficients may be calculated such that the approximation of the observations used for calculating the model is optimal in the least-squares sense.

Alternatively or additionally, the generative model is a sparse approximation model. The sparse approximation model may be fixed, or optimized using a sample of observations.

Alternatively or additionally, other suitable methods for calculating the generative model may be used.

Optionally, at 412, the object segments are approximated to a pre-determined order, for example, 1 or 2 or other values, based on the generative model.

Optionally, the approximated segments are smoothed. The smoothing may be selectively performed to increase the spatial regularity of the approximated segments. Alternatively or additionally, the approximation coefficients are smoothed. Optionally, smoothing the approximated segments is omitted. The smoothing step may be unnecessary, for example, in the case where the object segments overlap each other.

At 414, the object approximation is constructed. Optionally, the object approximation is constructed from the object segment approximations.

Optionally, the generative model is applied to the segments to generate low-order approximations of the segments. Optionally, the low-order approximations of the segments are recombined into a low order approximation of the object.

Optionally, the object approximation is performed by re-positioning each (or some) object segment approximation back to the location in the image domain where the corresponding object segment has been extracted from. Optionally, re-positioning the object segments is performed in a weighted manner when the extracted objects segments overlap.

Optionally, when the extracted object segments overlap each other, re-positioning an object segment approximation is performed in a weighted manner. When different object segments contribute to the same pixel, the contributed pixel values may be accumulated at each pixel location. The weights corresponding to the contributed pixel values may be accumulated for each pixel position as well. Once all (or some) object segment approximations are re-positioned, the accumulated pixel values may be divided by the accumulated weights to obtain the weighted pixel value.

The weights may be determined separately for each (or some) object segment, for example, based on the spatial location of each (or some) sample within the object segment, or according to a measure originating from the generative model (e.g., the approximation error or the sample variance) or both. Other suitable methods may be used.

Optionally, at 416, the object approximation is provided, for example, for storing, displaying, forwarding, and/or additional processing.

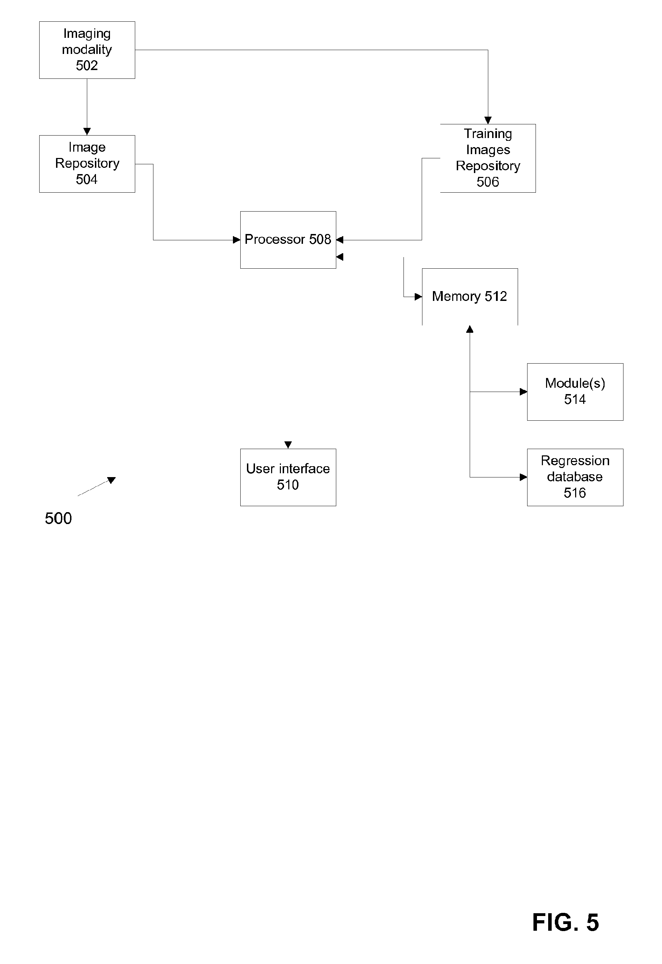

Reference is now made to FIG. 5, which is a block diagram of an exemplary system 500 for estimation and/or suppression of objects in an image, in accordance with some embodiments of the present invention. System 500 may be used to execute the methods described with reference to FIGs. 1-3, 8 and 9.

Optionally, system 500 includes an imaging modality 502 for acquiring the image with objects for suppression, for example, an x-ray machine, a fluoroscopy machine, a positron emission tomography (PET) machine, or other devices for generating images.

Acquired images are optionally stored in an image repository 504. Alternatively or additionally, the acquired images are stored in a training images repository 506.

Regression function data and/or parameters may be stored in a regression database 516.

Optionally, training images generated by other methods (e.g., as described herein) are stored in repository 506.

The images for processing (e.g., suppression) may be generated by an imaging modality that is different than the imaging modality used to generate the training images.

A processor 508 is in electrical communication with image repository 504, training images repository 506, and/or imaging modality 502, for receiving the image with objects for suppression, and/or for receiving the training images. Processor 508 is, for example, a laptop computer, a smartphone, a radiology workstation, a clinic workstation, a remote server, a local server, or other processors.

Processor 508 is in electrical communication with a non-transitory computer-readable medium, such as a memory 512. Memory 512 has stored thereon one or more modules 514 for performing the methods of FIGs. 1-3, 8 and/or 9, for example:
a module for training the regression function to calculate the object probability map;
a module for applying the trained regression function to calculate the object probability map;
a module for calculating the approximation of the object suppressed image;
a module for calculating the difference image;
a module for calculating the object approximation;
a module for calculating the object suppressed image;
a module for preprocessing the received images;
a module for extracting features from the images; and
a regression function module, and/or other methods for performing parts of the methods described herein.

Memory 512 may contain one or more databases 516 and/or modules 514 for storing data. Optionally, the trained regression function parameters are stored on regression database 516. The parameters may be stored instead of, or in addition to the training images.

Optionally, system 500 is a single system for training the regression function and for suppressing objects in images. Alternatively, system 500 contains two systems (virtually or physically), one for training and another for suppression. The training system may generate and provide the trained regression function to the object suppression system.

Optionally, a user interface 510 in electrical communication with processor 508 provides input and/or output abilities to the user. For example, a display for viewing the received images, any intermediately processed images, and/or the object suppressed image. Optionally, interface 510 allows the user to enter commands into processor 510, for example, to select images, to view images and/or to process images. Examples of interface 510 include: a keyboard, a mouse, a touchscreen, and/or voice recognition software.

The electrical communication described for system 500 may be wired or wireless, for example, network connections. The components and/or modules may be locally and/or remotely located.

The methods as described above are used in the fabrication of integrated circuit chips.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant images will be developed and the scope of the term image is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for estimating one or more semi-transparent objects from an image comprising:
receiving an image having at least one object for estimation, the at least one object being semi-transparent and overlaid over at least one other object, the image having a plurality of pixels;
calculating a probability map of the at least one object, the probability map comprising a plurality of pixels corresponding to the plurality of pixels of the received image, wherein each probability map pixel has a value proportional to the probability that the pixel of the received image contains the at least one object;
calculating an approximation image of an object suppressed image based on the object probability map, wherein the approximation image is substantially equal to corresponding regions of the received image at portions with low probability values, and the approximation image denotes a smooth approximation of the image with the at least one object suppressed at portions with high probability values of the object probability map; and
calculating the at least one object for estimation based on the calculated approximation of the object suppressed image.

2. The method of claim 1, wherein calculating the probability map comprises:
applying a transformation to the received image to generate a transformed image;
extracting features from the transformed image; and
calculating the probability values by applying a regression function to the extracted features.

3. The method of claim 2, wherein the extracted features comprise one or more of: responses to linear filters at different scales, orders and directions, grey values from the transformed images, and responses to nonlinear filters promoting specific structures.

4. The method of claim 1, wherein calculating the at least one object estimation based on the calculated approximation of the object suppressed image comprises:
calculating a difference image by subtracting the approximation image from the received image, wherein at regions of low object probability based on the object probability map pixels of the difference image have substantially zero value, and at regions of high object probability based on the object probability map the pixels have substantially equivalent value to the pixels of the at least one object overlaid on fine background image details; and
calculating an estimation of the objects as a low order approximation of the difference image.

5. The method of claim 1, wherein the smooth approximation of the object suppressed image is a weighted low-pass filtered image, the filter cutoff frequency being lower than an expected object frequency along at least one dimension.

6. The method of claim 1, wherein the smooth approximation of the object suppressed image is a weighted polynomial regression.

7. The method of claim 4, wherein low order object approximation is comprised of:
delineating the objects by applying a segmentation process to the probability map, or by detecting the objects by applying an object detection and/or ridge detection process;
dividing the objects into a plurality of segments;
constructing a generative model from the plurality of segments; and
applying the generative model to the plurality of segments to generate low-order approximations of the segments; and
re-combining the low-order approximations of the segments into a low order approximation of the object.

8. The method of claim 7, further comprising pre-processing the at least one object segments before constructing the generative model, the pre-processing selected to reduce variability within segment sets of same instances of the at least one object.

9. The method of claim 7, wherein re-combining comprises re-positioning the approximated object segments back to the location in an image domain where the corresponding object segment is extracted from.

10. The method of claim 2, further comprising calculating the image with the at least one object suppressed, by subtracting the approximated at least one object from the received image, and at least one of outputting, displaying, and forwarding the image with the at least one object suppressed.

11. A method for generating a trained regression function for use in a process to estimate semi-transparent objects from an image, comprising:
receiving a plurality of pairs of training images, each pair of training images comprises a training image with at least one object for estimation and an object image of the at least one object for estimation, the at least one object being semi-transparent and overlaid over at least one other object, wherein each of the pairs of training images comprise a plurality of pixels; and
training a regression function to generate an object probability map for an acquired image with at least one semi-transparent object for estimation, the training based on the pairs of training images, the object probability map comprising a plurality of pixels corresponding to the plurality of pixels of the received image, wherein each probability map pixel has a value proportional to the probability that the pixel of the received image contains the at least one object.

12. A method for suppressing semi-transparent objects in an image comprising:
receiving an image having at least one object for suppression, the at least one object being semi-transparent and overlaid over at least one other object, the image having a plurality of pixels;
receiving an object probability map, the object probability map is an object probability map comprising a plurality of pixels corresponding to the plurality of pixels of the received image, wherein each probability map pixel has a value proportional to the probability that the pixel of the received image is for suppression;
receiving a difference image or calculating the difference image based on the received image and received object probability map, wherein regions of the difference image corresponding to at least one portion of the object probability map for suppression have substantially zero value, and regions of the difference image corresponding to portions other than the at least one portion of the object probability map for suppression have substantially equivalent value to the regions of the at least one object overlaid on fine background image details;
identifying separate instances of the at least one object within the difference image based on the object probability map;
dividing the identified instances of the at least one object within the difference image into segments; and
calculating a generative model based on the segments, for generating an approximation image of the at least one object for suppression.

13. The method of claim 12, wherein dividing comprises dividing the identified instances of the at least one object into overlapping image patches to induce regularity along an approximation of the at least one object.

14. The method of claim 12, further comprising pre-processing the at least one object segments before constructing the generative model, the pre-processing selected to compensate for accurate segmentation of the at least one object and to reduce variability within segment sets of different instances of the at least one object.

15. The method of claim 12, further comprising:
approximating the object segments to a pre-determined order based on the generative model;
generating an approximation of the at least one object based on the object segment approximations; and
generating the image with the at least one object suppressed by subtracting the approximation of the at least one object from the received image having the at least one object for suppression.
